# FASCICULE DE BREVET EUROPEEN

(11) **EP 0 353 140 B1**
(45) Date de publication et mention de la délivrance du brevet: **08.03.1995**
(21) Numéro de dépôt: 89402097.3
(22) Date de dépôt: 25.07.1989
(51) Int. Cl.: B32B 17/10, C03C 27/12

(54) **Procédé de fabrication d'un vitrage bombé**
Verfahren zur Herstellung einer Glasscheibe
Process to produce a curved glass

(30) Priorité: 27.07.1988 FR 8810138
(43) Date de publication de la demande: 31.01.1990
(60) Demande divisionnaire: 94109000.3
(73) Titulaire: SAINT-GOBAIN VITRAGE INTERNATIONAL, 92400 Courbevoie (FR)
(72) Inventeur: Harmand, Hélène, F-75011 Paris (FR); Trouve, Maurice, F-77140 Nemours (FR); Sauvinet, Vincent, F-60950 Ermenonville (FR)
(74) Mandataire: Luziau, Nelly

(56) Documents cités:
- EP-A- 0 108 616
- US-A- 2 648 754
- US-A- 4 057 671

## Description

La présente invention concerne un vitrage muni d'un revêtement électroconducteur à base d'oxydes métalliques obtenu par pyrolyse de composés en poudre, utilisable notamment en tant que pare-brise pour automobile.

En particulier, l'invention concerne un vitrage comprenant un tel revêtement qui présente une résistance électrique suffisamment basse et malgré tout une bonne transmission lumineuse dans le visible pour que son utilisation en tant que vitrage chauffant pour l'automobile puisse être envisagée.

Il est connu par divers brevets antérieurs de fabriquer des vitrages revêtus de couches conductrices ayant la transmission lumineuse supérieure à 75 % ou 70 % selon les législations, qui autorise leur utilisation en tant que vitrages pour l'automobile et présentant une résistance par carré de l'ordre de 10 ohms et même descendant jusque 5 ohms.

Ainsi le document de brevet EP-A-192 009 propose des vitrages revêtus d'une couche d'ITO (indium tin oxide) pyrolysée obtenue à partir de composés en poudre, d'épaisseur de 1900 et de 3000 Angstroems, présentant des résistances par carré qui sont respectivement de 11 et de 7,5 ohms et des facteurs de transmission lumineuse respectivement de 83 et 82 %.

La couche de 3000 Angstroems d'épaisseur est rouge mauve en réflexion, ce qui sur le plan esthétique, harmonie avec les couleurs de carrosseries des voitures, a peu de chance d'être accepté.

En outre ces couches pyrolysées présentent un léger mouchetis et un léger voile qui ne sont pas du tout gênants pour un vitrage utilisé dans le bâtiment, mais qui pour un vitrage automobile peuvent être contestés. Ainsi, les normes pour les pare-brise d'automobiles requièrent que le voile (pourcentage de lumière diffuse) ne soit pas supérieur à 0,5%, ce qui est inférieur à ce que l'oeil est capable d'apercevoir en vision normale (2 à 3%) et à ce qui est accepté pour des vitrages destinés au bâtiment.

Il est à noter que ce brevet antérieur EP-192 009 propose la réalisation de vitrages feuilletés à couche ITO, mais, pour faciliter le traitement thermique réducteur de l'ITO, il prévoit d'opérer ledit traitement thermique réducteur sur le vitrage feuilleté réalisé avec un brûleur, le brûleur ayant l'avantage d'échauffer rapidement la couche d'ITO pour la traiter, sans avoir le temps d'échauffer la structure du vitrage, la couche d'ITO étant pour cela disposée sur une face extérieure du vitrage, directement au contact de la flamme du brûleur.

Le document de brevet US-4 490 227 propose quant à lui des vitrages revêtus d'une couche d'ITO obtenue par des techniques sous vide, d'épaisseur de l'ordre de 2800 Angstroems, de transmission de l'ordre de 78% de résistance au carré approximativement de 7 à 10 ohms.

Ces couches sous vide sont longues à fabriquer, coûteuses et l'obtention de résistances plus faibles augmenterait le temps de fabrication et le coût d'une part, risquerait de faire franchir les 75% ou 70% de transmission requis pour des vitrages automobiles d'autre part.

Le document US-4 665 811 propose des couches d'ITO déposées par pulvérisation cathodique puis réduites par application d'une peinture à base de carbone. Elles ont alors des résistances par carré descendant jusqu'à 5 ohms et conservant une transmission lumineuse compatible avec les utilisations dans le domaine de l'automobile. Les coûts de production sont élevés, les temps de production sont longs et l'augmentation des épaisseurs augmenterait encore ces coûts et ces temps de production d'une part et diminuerait trop la transmission lumineuse d'autre part.

Est également connu du brevet US-4 057 671 un vitrage feuilleté comprenant un réseau de fils conducteurs ou alternativement une couche continue conductrice. La couche continue peut être déposée notamment par pulvérisation cathodique ou pyrolyse sur l'un des vertes, les vitrages en question ne subissent pas de bombage.

Une autre demande de brevet européen déposé sous le numéro 89.402098.1 le 25 juillet 1989 et publiée sous le numéro EP-A-0 353 141 concerne un vitrage feuilleté dont la couche conductrice se trouve en face 3. Les quatres faces des deux plaques de verte étant numérotées conventionnellement 1, 2, 3, 4 en allant de l'extérieur vers l'intérieur d'un véhicule sur lequel ledit vitrage est monté.

Sont également connus des vitrages revêtus d'un empilement de couches obtenues par des techniques sous vide, couches parmi lesquelles est présente une couche d'Ag entourée de couches de diélectrique. Ces vitrages ont, comme les précédentes déjà mentionnés, une résistance électrique supérieure à 5 ohms et en outre ces couches s'oxydent et se dégradent facilement, notamment à l'humidité. Par ailleurs, les feuilles de verte revêtues de ces empilements de couches contenant une couche d'Ag, nécessitent des précautions importantes lors de leur feuilletage en vue de constituer des vitrages feuilletés, car la moindre salissure, la moindre poussière crée un défaut visible.

La présente invention vise à fournir un vitrage revêtu d'un dépôt électroconducteur d'ITO, utilisable en tant que vitrage pour l'automobile et en général pour véhicule, susceptible d'être chauffé électriquement grâce à l'énergie électrique disposi- ble sur le véhicule, dont le dépôt ITO soit résistant, soit esthétique (couleur neutre ou identique à celle des vitrages anti-solaires pour automobiles utilisés et appréciés actuellement, sans mouchetis, sans voile, ...) et dont le coût de production soit moins élevé que celui des vitrages produits sous vide.

Cette utilisation des vitrages dans l'automobile implique une transmission lumineuse pour l'illuminant A, (T_{L}), importante, qui selon les réglementations doit être au moins de 75 % ou 70 %, suivant les législations.

Elle vise de préférence un vitrage revêtu d'un dépôt électroconducteur d'ITO ayant une résistance électrique par carré égale ou avantageusement inférieure à 5 ohms.

En outre, elle vise aussi de préférence, un vitrage améliorant le confort d'été des passagers du véhicule, donc capable de présenter malgré la transmission lumineuse importante requise par les réglementations, une transmission énergétique abaissée par rapport à un vitrage traditionnel.

L'invention a pour objet un procédé de fabrication d'un vitrage bombé comprenant au moins une plaque de verre revêtue d'une couche électroconductrice à base d'oxyde métallique, notamment une couche d'oxyde d'indium dopé à l'étain, cette couche étant associée à une feuille plaquée sur elle et composée d'une matière plastique souple. Ledit procédé consiste à :
- déposer sur la plaque de verre plane la couche électroconductrice par une technique de pyrolyse de composés pulvérulents, notamment de composés d'étain et d'indium,
- effectuer le bombage de la plaque de verre ainsi revêtue de manière à ce que la couche électroconductrice se trouve située sur la face convexe de ladite plaque de verre,
- effectuer le cas échéant le bombage de la seconde plaque de verre destinée à être plaquée sur l'autre face de la feuille de matière plastique.
- effectuer le traitement réducteur de la couche électroconductrice,
- assembler la plaque de verre revêtue de la couche électroconductrice avec la feuille en matière plastique et le cas échéant la seconde plaque de verre.

L'invention propose donc d'obtenir un vitrage ayant au moins une plaque de verre revêtue d'une couche d'ITO, obtenue par pyrolyse d'un mélange pulvérulent d'un composé d'étain, notamment du DBTO (oxyde de dibutylétain) et d'un composé d'indium, en particulier le formiate d'indium, puis par traitement réducteur de la couche ainsi obtenue, associée avec une feuille d'un matériau du type matière plastique souple à indice s'approchant plus de celui de la couche ITO que l'indice de l'air.

Cette feuille est en un matériau appartenant au groupe suivant :
- PVB (butyral de polyvinyle),
- PVC (chlorure de polyvinyle),
- PU (polyuréthane),
et possède un indice compris entre l'indice 1 de l'air et l'indice de l'ordre de 1,8 de la couche ITO, notamment un indice de l'ordre de 1,5.

Grâce à la disposition de la couche ITO sur une face de feuille de verre qui permette sa mise en contact avec un matériau souple apte à épouser intimement les éventuelles irrégularités de surface de la couche ITO, grâce à l'indice élevé de ce matériau, les mouchetis sont pratiquement supprimés et en outre le possible aspect voilé de la couche ITO est inexistant et compatible avec les réglementations.

Avantageusement, la couche ITO a une épaisseur telle que sa couleur est une couleur appréciée pour les vitrages d'automobile, en particulier une couleur légèrement verte en réflexion.

Suivant un premier mode de réalisation, la couche d'ITO a une épaisseur d'au moins 330 nanomètres, ce qui lui confère une résistance par carré égale ou inférieure à 5 ohms et de préférence une épaisseur de l'ordre de 350-380 nanomètres, ce qui lui confère une résistance par carré de l'ordre de 4,5 ohms - 4,0 ohms.

Selon un autre mode de réalisation, la couche ITO a une épaisseur de l'ordre de 180 nanomètres, ce qui lui confère une résistance par carré de l'ordre de 10 ohms.

Avantageusement pour conférer au vitrage des propriétés de transmission énergétique améliorée visant à accroître le confort d'été et également pour contribuer à l'amélioration de l'aspect dudit vitrage, la plaque de verre portant le revêtement d'ITO et/ou une autre plaque de verre qui lui est associée pour constituer avec elle un vitrage feuilleté, est en un verre teinté dans sa masse, du type dit "TSA" ou "TSA2+".

L'invention propose également un procédé pour fabriquer le vitrage à couche ITO électroconductrice tel que présenté précédemment.

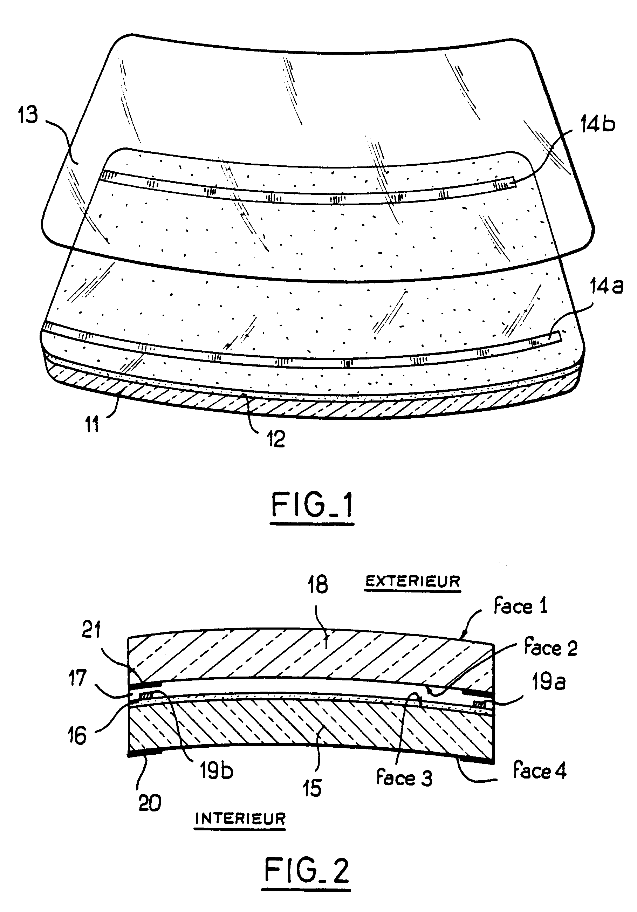

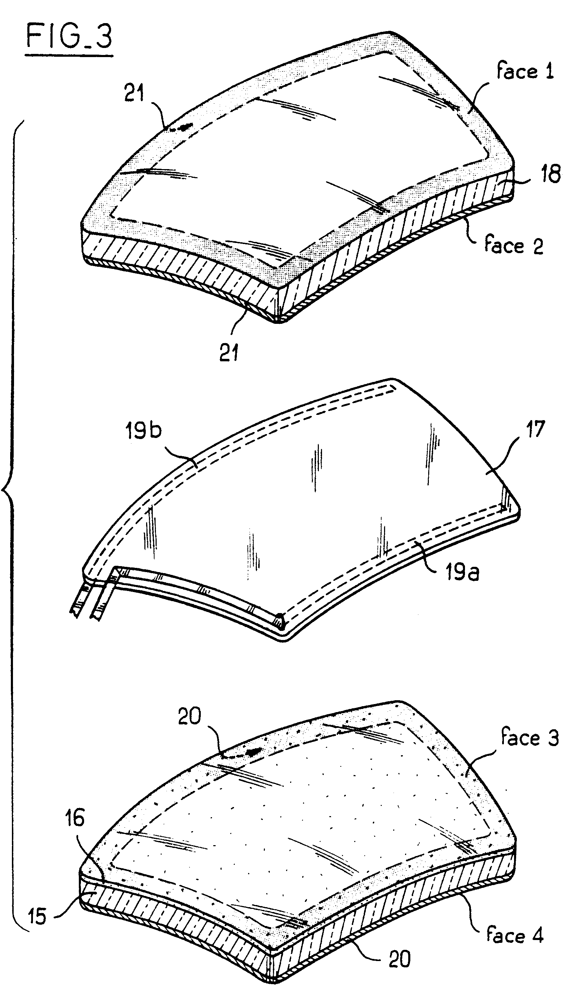

L'invention sera maintenant décrite plus en détail en référence aux figures jointes qui représentent :
. figure 1 : une première variante d'un vitrage selon l'invention, en vue éclatée,
. figure 2 : un vitrage feuilleté ayant selon l'invention une couche d'ITO,
. figure 3 : un vitrage feuilleté selon l'invention ayant reçu ses dépôts d'émail et amenées de courant électrique en vue d'être monté en tant que pare-brise d'automobile.

La figure 1 montre un vitrage constitué d'une seule plaque de verre 11 revêtue d'une couche 12 d'ITO, et associée à une feuille 13 d'un matériau souple à indice de réfraction supérieur à celui de l'air, compris entre l'indice de l'air et l'indice de la couche d'ITO (1,8) et notamment de l'ordre de 1,5, apte à parfaitement adhérer sur la couche 12, à en épouser intimement les éventuelles irrégularités, apte également à être utilisée telle quelle, c'est-à-dire sans protection ou recouvrement.

Une telle feuille 13, à base de polyuréthane (P.U.) est décrite en détail dans les documents de brevets publiés en EUROPE sous les numéros 54 491, 132 198, 133 090 et le document de brevet publié en FRANCE sous le numéro 2 398 606. Selon ces brevets, la feuille de PU est une feuille bicouche comprenant une couche de PU thermoplastique absorbeur d'énergie et une couche de PU thermodurcissable autocicatrisante et antilacération.

La plaque 11 est en verre silico-sodo-calcique utilisé classiquement pour les vitrages automobiles et bâtiments. Il peut s'agir d'un verre clair, c'est-à-dire non coloré, présentant une transmission lumineuse importante, supérieure à 90 % sous une épaisseur de 4 mm. Il peut s'agir aussi, d'un verre coloré dans sa masse apte à procurer un confort d'été accru pour les passagers du véhicule ou du local équipé de tels verres, du fait de son facteur de transmission énergétique réduit.

Avantageusement la coloration du verre est la même que celle de la couche, à savoir vert pour les épaisseurs de couche de l'ordre de 350-380 n.m, ou 180 n.m.

Ainsi du seul fait de la coloration du verre, les éventuelles légères irrégularités de couleur de la couche sont masquées. En outre la couleur verte est fortement appréciée pour les vitrages automobiles.

Par ailleurs, ces verres teintés dans leur masse par des oxydes de fer, possèdent des propriétés d'absorption du rayonnement IR, et donc en général des propriétés énergétiques intéressantes, grâce auxquelles le confort d'été est accru.

Ainsi comme verre coloré, on peut utiliser du verre dit "TSA" contenant Fe₂0₃ dans des proportions pondérales de l'ordre de 0,55 à 0,62 %, FeO pour environ 0,11 à 0,16 %, ce qui conduit à un rapport Fe²⁺/Fe de l'ordre de 0,19 à 0,25, CoO pour moins de 12 ppm et même de préférence pour moins de 10 ppm.

Il en résulte des propriétés par exemple pour une épaisseur de 3,85 mm de transmission lumineuse (T_{L}) élevées voisines de 78 %, un facteur énergétique de transmission (T_{E}) relativement bas et voisin de 60, ce qui conduit à un rapport T_{L}/T_{E} de l'ordre de 1,30.

On peut aussi utiliser comme verre coloré, en particulier lorsque la réglementation n'impose qu'une transmission lumineuse de 70%, un verre un peu plus coloré que le "TSA", mais présentant par contre une transmission lumineuse un peu plus faible, à savoir un 'TSA2+".

Ce "TSA2+" est coloré par les mêmes oxydes que précédemment mais dans des proportions légèrement différentes.

Ainsi les proportions d'oxydes métalliques sont les suivantes :
Fe203 : approximativement compris entre 0,75 et 0,90 %
FeO : approximativement compris entre 0,15 et 0,22 %
CoO : inférieur à 17 ppm et même de préférence inférieur à 10 ppm soit Fe²⁺/Fe = 0,20 environ

Il en résulte pour ce verre "TSA2+", en 3,85 mm d'épaisseur les propriétés suivantes :
T_{L} : de l'ordre de 72 %
T_{E} : de l'ordre de 50 %

ce qui conduit à un rapport T_{L}/T_{E} de l'ordre de 1,40 ou 1,50.

Ainsi un vitrage automobile selon l'invention peut être réalisé avec une feuille de verre 11 en verre "TSA" d'épaisseur 3 mm, recouvert d'une couche ITO d'épaisseur de l'ordre de 350-380 n.m ou à fortiori de l'ordre de 180 n.m, elle-même recouverte de polyuréthane comme décrit dans les brevets antérieurs déjà cités. Avec l'épaisseur de couche de 180 n.m, l'épaisseur de verre "TSA" peut être légèrement plus importante, et atteindre jusqu'à 3,5 ou 4 mm.

Il en résulte un vitrage de couleur très légèrement verte en transmission, verte en réflexion ayant un T_{L} compatible avec la réglementation auto (plus de 75 %) et un T_{E} de l'ordre de 1,40.

Si l'on veut à la place du verre "TSA" employer du "TSA2+", en ayant des coefficients de transmission lumineuse compatibles avec les réglementations, on peut choisir une plaque de verre 11 en verre "TSA2+" de 3 mm d'épaisseur, de préférence avec une épaisseur de couche de 180 n.m. Il en résulte alors pour le vitrage fini un coefficient T_{L} supérieur à 70 %, un coefficient T_{L}/TE de l'ordre de 1,50, c'est-à-dire une transmission énergétique réduite et donc un confort d'été amélioré.

Bien entendu des vitrages selon l'invention avec des épaisseurs de verre pour constituer la plaque 11, inférieures à celles énoncées ci-dessous, sont à fortiori possibles puisque cela permet d'augmenter la transmission lumineuse et qu'en conséquence les réglementations restent satisfaites.

La figure 2 montre un vitrage feuilleté à au moins deux épaisseurs de verre, constitué d'une première plaque de verre 15 revêtue d'une couche 16 d'ITO associée à une feuille 17 d'un matériau à indice de réfraction supérieur à celui de l'air, compris entre l'indice de l'air et l'indice de la couche d'ITO (1,8) et notamment de l'ordre de 1,5 apte à parfaitement adhérer sur la couche 16, à en épouser intimement les éventuelles irrégularités, apte

également à constituer l'intercalaire plastique d'un vitrage feuilleté, constitué également d'une seconde plaque de verre 18. Si désiré, des feuilles supplémentaires de verre, d'intercalaires plastiques peuvent être ajoutées pour former un feuilleté plus épais, plus résistant.

La feuille 17 est par exemple en PVB (butyral de polyvinyl) classiquement utilisé pour réaliser des vitrages feuilletés, en PVC (chlorure de polyvinyl), en PU (polyuréthane).

La plaque de verre 18 et/ou éventuellement la plaque de verre est avantageusement en verre coloré dans sa masse, à propriétés énergétiques améliorées, comme dit précédemment en verre "TSA", ou "TSA2+".

Les couches 12 et 16 d'ITO des réalisations montrées figures 1 et 2 sont obtenues par pyrolyse d'un mélange de poudres d'un composé d'indium comme constituant essentiel, notamment le formiate d'indium (InFo) et d'un composé d'étain, notamment l'oxyde de dibutyl étain (DBTO). Dans le cas de InFo et DBTO les proportions pondérales sont de l'ordre de 90 % de InFo et 10 % de DBTO ; les granulométries sont comprises entre 5 et 20 microns et de préférence entre 5 et 15 microns.

Un tel mélange de InFo et DBTO est décrit dans le document de brevet européen 192 009.

La distribution du mélange de poudres sur le substrat en verre est faite à l'aide d'installations déjà décrites en détail dans les documents de brevets européens publiés sous les n° 125 513, 130 919, 191 258, 189 709, 188 962.

La quantité de mélange projeté est telle que la couche 12 ou 16 formée ait une épaisseur soit d'au moins 330 nanomètres et par exemple de l'ordre de 350-380 nanomètres, soit de l'ordre de 180 nanomètres. Une fois la couche d'ITO 12 ou 16 déposée, si nécessaire la plaque de verre 11 ou 15 portant ladite couche est bombée, ainsi d'ailleurs et de préférence en même temps, que l'éventuelle autre plaque de verre 18, non revêtue, destinée à être associée à la plaque 15 dans le cas où un vitrage feuilleté à deux plaque de verre doit être réalisé. Avantageusement, cette plaque 11 ou 15, ainsi éventuellement que l'autre plaque de verre 18 destinée à former un vitrage feuilleté, sont légèrement trempées sur leur bords pour rendre lesdits bords plus solides et ainsi favoriser les manutentions, le montage dans les fenêtres ou les baies de carrosseries automobiles, etc..., en minimisant les casses.

Cette couche 12 ou 16 déposée sur la plaque de verre 11 ou 15, éventuellement bombée, est réduite lors d'un traitement spécifique, par exemple un traitement thermique en atmosphère réductrice contrôlée ou un traitement thermique par brûleur à flamme réductrice.

Ainsi qu'il est connu le traitement thermique en atmosphère réductrice contrôlée, peut se faire à une température de l'ordre de 400 _{°} C pendant environ 30 min dans une atmosphère réductrice contenant par exemple N₂ + 10 % H₂. D'autres temps, températures, pourcentages d'hydrogène peuvent être choisis en sachant cependant que si le temps diminue, il convient, pour obtenir le même résultat, d'augmenter la température et/ou le pourcentage d'hydrogène et vice-versa. Toutefois, cette température de l'ordre de 400 °C, à laquelle le relâchement des contraintes dans le verre est lent, a l'avantage de préserver en grande partie la légère trempe des bords des plaques de verre.

Le traitement réducteur peut se faire indépendamment du traitement de bombage, ou si désiré, se faire simultanément. Dans ce dernier cas, la feuille de verre 11 ou 15 revêtue de sa couche 12 ou 16 à réduire, et éventuellement aussi la seconde feuille de verre 18 destinée à être associée à la feuille 15 pour constituer un vitrage feuilleté, est (sont) posée (s) sur un squelette ou cadre de bombage et enfournée (s) dans un four chauffé à température de l'ordre de 600 ou 650 _{°} C et sous atmosphère réductrice contrôlée. Elle (s) épouse (nt) le profil du squelette au fur et à mesure qu'elle (s) s'échauffe (nt) et simultanément la couche 2 ou 6 se réduit.

Selon l'invention, dans la mesure où l'on fabrique un feuilleté, la couche 12 ou 16 d'ITO est déposée sur une face d'une feuille de verre 11 ou 15 destinée à être en contact avec l'intercalaire plastique, par exemple en PVB. Lorsqu'il y a deux feuilles de verre 11 et 18 enfournées pour être bombées, la couche 16 d'ITO déposée sur l'une des feuilles de verre 11 est disposée entre lesdites deux feuilles de verre 11 et 18. Malgré le fait que la couche 16 soit enfermée entre les deux feuilles 11 et 18, sa réduction s'opère aussi bien que si elle n'était pas recouverte et était en contact libre avec l'atmosphère traitante.

Bien entendu, dans ce cas où bombage et réduction s'opèrent simultanément, la température dans le four est plus élevée, ce qui autorise une durée de traitement thermique réducteur plus courte ; et/ou un proportion plus réduite d'hydrogène.

Avantageusement, pour assurer une grande homogénéité du traitement réducteur, que celui-ci soit fait en une opération indépendante du bombage ou simultanément au bombage, une légère surpression est entretenue dans le four de réduction (éventuellement en même temps four de bombage), inférieure à 1 bar de l'ordre de 0,1 à 0,5 bar, par exemple 0,2 bar.

Si une légère trempe, par exemple des bords de la (ou des) feuilles est souhaitée, un soufflage est pratiqué à la sortie du bombage (qui éventuellement dans certains cas est simultané avec l'opération de réduction).

La feuille 13 ou 17 en matériau du type PVB, PVC, PU peut également être avantageusement colorée, notamment en une couleur identique à celle de la couche d'ITO ce qui fait encore plus disparaître les éventuelles petites irrégularités de couleur de la couche d'ITO. Ces techniques de coloration du PVB, PU, PVC sont bien connues et ne seront pas détaillées ici.

Toutefois il faut remarquer que si la couche ITO pyrolysée selon l'invention présente de remarquables propriétés de transmission lumineuse pour une résistance électrique donnée, qui autorisent l'association de ladite couche avec des plaques de verre ou des PVB, PU, PVC colorés tout en respectant la réglementation en matière de transmission lumineuse, il est préférable de choisir plutôt un verre coloré qu'un PVB coloré, le verre coloré amenant par ses propriétés intrinsèques un confort thermique d'été que n'amène pas le PVB, PU ou PVC coloré.

Pour pouvoir alimenter électriquement la couche 12 ou 16, des bandes d'amenée de courant sont à mettre en place.

Ces bandes peuvent être, comme habituellement des bandes conductrices sérigraphiées à base d'Ag. Compte tenu de la solidité de la couche ITO, de son épaisseur, de son bon accrochage au verre, avantageusement à la place des bandes conductrices sérigraphiées classiques on utilise des rubans ou clinquants métalliques accolés à la couche conductrice d'ITO, maintenus ainsi accolés par la feuille de matière plastique du type PVB, PU ou PVC adhérente à la couche.

Les clinquants métalliques peuvent être en cuivre étamé, sous forme d'un ruban de 8 mm de large, de l'ordre de 80 um d'épaisseur ; ces amenées de courant ont une résistance par mètre de longueur de l'ordre de 0,028 ohm, donc très nettement inférieur à la résistance des amenées de courant traditionnelles déposées par sérigraphie.

Dans le mode de réalisation de la figure 1, ces bandes conductrices sérigraphiées ou sous forme de clinquants métalliques (cuivre étamé) sont référencées 14a et 14b.

Dans le mode de réalisation de la figure 2, elles sont référencées 19a et 19b.

A titre de décoration, pour masquer les bandes conductrices ainsi que la colle éventuelle servant à fixer des vitrages dans leur baie, sont également prévus des dépôts périphériques d'émail.

Un vitrage du type de celui de la figure 2 est montré en vue éclatée plus détaillée, avec tous ses équipements (bandes conductrices dépôts d'émail) en figure 3. On retrouve sur cette figure 3 les mêmes éléments qu'en figure 2 et avec les mêmes références, à savoir, la feuille de verre 15, portant la couche 16 d'ITO, une seconde feuille de verre 18 exempte de toute couche, mais éventuellement en un verre coloré dans sa masse, du type "TSA" ou "TSA2+" la feuille 17 de matière du type PVB, d'indice supérieur à celui de l'air et éventuellement colorée, les bandes conductrices 19a et 19b notamment sous la forme de clinquants, disposées sensiblement horizontalement et sensiblement parallèles, l'une en partie haute du vitrage, l'autre en partie basse.

Sont également figurés en figure 3 des dépôts périphériques d'émail sombre, opaque, par exemple noir, destinés à essentiellement améliorer l'esthétique du vitrage posé dans une baie notamment par collage. Cet émail sert en particulier à masquer les bandes 19a et 19b d'amenée de courant et la colle servant à fixer le pare-brise. Ces dépôts d'émail protègent aussi la colle servant à fixer le pare-brise de l'action néfaste du soleil. Pour réaliser ces diverses fonctions, au moins deux dépôts d'émail sont nécessaires : l'un en face 4 du vitrage feuilleté, c'est-à-dire sur la face tournée vers l'intérieur de la feuille de verre 15 la plus à l'intérieur de l'habitacle fermé par le vitrage, l'autre sur la face 2 du vitrage feuilleté, c'est-à-dire la face de la feuille de verre extérieure 18 tournée vers l'intérieur de l'habitacle. (De façon conventionnelle, les faces d'un vitrage feuilleté monté dans une baie et fermant un habitacle par exemple un véhicule automobile sont numérotées de l'extérieur de l'habitacle vers l'intérieur : 1 pour la face tournée vers l'extérieur de la feuille de verre extérieure, 2 pour la face intérieure de cette même feuille en contact avec l'intercalaire plastique, 3 pour la face dirigée vers l'intérieur du vitrage, en contact avec l'intercalaire plastique, de la feuille de verre la plus intérieure, 4 pour la face intérieure à l'habitacle, de la feuille de verre disposée la plus à l'intérieur).

Avantageusement, lorsqu'un tel dépôt d'émail est fait sur une face de la plaque de verre destinée à venir en contact au cours de la phase ultérieure de bombage avec une autre plaque de verre, ledit dépôt d'émail est recuit préalablement à toute superposition le mettant en contact avec un autre verre, pour éviter qu'il ne salisse cet autre verre. Ceci est en particulier pratiqué pour le bord d'émail déposé face 2.

Comme montré sur la figure 3, la couche 16 d'ITO est déposée en face 3. Cette couche 16 est par exemple déposée à la sortie du bain float d'une installation de fabrication de verre plat, sur un ruban de verre plat fabriqué en continu. Ce ruban est découpé en rectangles, puis suivant la forme développée du pare-brise ou en général vitrage à réaliser ; ceci constitue alors la plaque 15 revêtue de sa couche 16. Cette plaque 15 reçoit alors sur sa face non revêtue d'ITO, c'est-à-dire la face qui constituera la face 4 du vitrage feuilleté, un dépôt 20 d'émail à sa périphérie par une technique classique de sérigraphie. Ensuite cette plaque 15 revêtue d'ITO d'un côté, avec son dépôt d'émail périphérique de l'autre, est associée avec une autre plaque de verre, la plaque 18, découpée elle aussi par exemple dans le ruban sortant d'une ligne float, en verre clair ou en verre teinté dans sa masse. Cette plaque 18 plane reçoit sur une de ses faces, celle qui constituera la face 2 du vitrage feuilleté, un dépôt périphérique d'émail 21. Avantageusement, ce dépôt 21 en face 2 est recuit.

Les deux plaques de verre 15 et 18 sont appairées, c'est-à-dire superposées, face 2 contre face 3, et bombées simultanément par chauffage et par exemple affaissement sur un cadre ou squelette de bombage.

La plaque 15 seule, ou les deux plaques encore superposées à la suite du bombage, est (sont) alors soumise (s) au traitement réducteur pour valoriser les propriétés de la couche d'ITO 16. Dans les pare-brise de forme bombée classique, la couche 16 est sur une face convexe, elle est donc mise en légère extension par bombage du verre, sans précaution particulière et malgré cela ses propriétés, en particulier électriques ne sont pas affectées.

La feuille intercalaire 17 de matière à indice voisin de celui de la couche d'ITO, en particulier en PVB, est découpée, associée avec les clinquants 19a et 19b notamment par soudage ponctuel à chaud desdites clinquants sur les bords haut et bas de la feuille. Avantageusement, à une extrémité de la bande haute 19a, le clinquant métallique n'est pas coupé, mais passe de l'autre côté du PVB au travers d'une incision pratiquée dans le PVB, puis descend verticalement le long du bord du PVB jusqu'au niveau du brin inférieur 19b de clinquant. Les deux brins 19b et 19a de clinquant, isolés l'un de l'autre sont associés pour pouvoir sortir en un endroit unique.

Cette feuille de matière type PVB est alors mise en intercalaire entre les deux plaques de verre 15 et 18, les brins 19a et 19b du clinquant étant accolés à la couche 16 sur la face 3.

L'ensemble du vitrage ainsi réalisé est feuilleté par les techniques classiques du feuilletage, par pressage, action du vide et de la chaleur. Cette technique de feuilletage étant classique, elle ne sera pas développée ici. Signalons seulement que des pressions de l'ordre de 10 bars, des températures de l'ordre de 130 _{°} C peuvent être mises en oeuvre à cet effet pendant des temps de l'ordre de l'heure.

Les extrémités des brins 19a et 19b sortant du vitrage ainsi réalisé sont disponibles pour être branchés sur la source de courant électrique du véhicule sur lequel le vitrage sera monté.

Eventuellement, ces brins 19a et 19b peuvent être coupés et reliés à une connexion particulière facilitant la liaison avec la source de courant.

On peut comme déjà dit utiliser pour la plaque de verre 18 un verre dit "TSA" pour améliorer les qualités énergétiques du vitrage.

Ainsi la plaque 18 peut être en un verre "TSA" de 2,1 mm ou 2,2 mm d'épaisseur, la plaque 15 revêtue ITO peut être en un verre clair classique de 2,1 à 2,6 mm d'épaisseur et la feuille 17 peut être un PVB de 0,76 mm d'épaisseur. Il en résulte un vitrage d'aspect légèrement verdâtre, de couleur parfaitement uniforme avec un coefficient T_{L} de l'ordre de 77 %, donc en accord avec toutes les réglementations en matière de vitrage auto et un coefficient T_{E} de l'ordre de 50 % soit un rapport T_{L}/T_{E} de l'ordre de 1,5.

Dans un autre mode de réalisation la plaque 18 a 2,6 mm d'épaisseur, toutes autres choses égales par ailleurs le coefficient T_{L} tombe légèrement en dessous de 75 % pour une épaisseur de couche ITO de l'ordre de 350-380 n.m, mais satisfait la réglementation des pays où un T_{L} de seulement 70 % est éxigé. Par contre, pour une épaisseur de couche ITO de l'ordre de 180 n.m, le seuil de 75 % est satisfait.

Dans la mesure où les bandes d'amenée de courant 19a et 19b ne sont pas des clinquants métalliques, mais des bandes sérigraphiées, lesdites bandes sérigraphiées sont déposées sur les bords supérieurs et inférieurs de la plaque de verre 15 revêtue de sa couche ITO sur cette couche ITO, donc en face 3 du vitrage feuilleté après découpe aux dimensions du vitrage fini et après émaillage périphérique en face 4 de la même plaque 15.

Avantageusement, avant association avec l'autre plaque de verre 18 pour bombage, ces bandes sérigraphiées sur la plaque 15 sont recuites.

Dans la mesure où le vitrage réalisé est du type montré sur la figure 1, c'est-à-dire avec une seule plaque de verre 11 revêtue ITO en association avec une feuille de matière d'indice supérieur à celui de l'air et aussi voisin que possible de celui de l'ITO, par exemple en PU, les bandes conductrices 14a et 14b sont elles aussi soit sérigraphiées soit en clinquants. Elles sont alors en contact avec la couche ITO.

Dans la mesure où il s'agit de bandes conductrices sérigraphiées, celles-ci peuvent être masquées de l'extérieur par un dépôt d'émail opaque non représenté sur la figure, de préférence continu tout à fait à la périphérie du vitrage, puis dégradé en pointillés du côté du centre du vitrage, la bande conductrice à l'Ag sérigraphiée étant avantageusement déposée en limite de l'émail, à cheval sur les pointillés dudit émail et sur la couche ITO seule.

Avantageusement pour ce vitrage du type de celui montré sur la figure 1, les clinquants métalliques ou les bandes sérigraphiées sont masqués par un cadre en matière thermoplastique monté in situ par la technique dite d'encapsulation. Ce cadre d'encapsulation peut aussi servir de cache, de protection et d'isolant pour le brin de clinquant métallique cheminant jusqu'à sa sortie du vitrage de l'autre côté de la feuille de PU, c'est-à-dire non en contact avec la couche ITO.

Bien entendu, une telle encapsulation est particulièrement intéressante dans le cas d'un vitrage selon la figure 3, mais elle peut également être mise en oeuvre sur un autre vitrage, par exemple celui montré figures 2 ou 3.

Ainsi donc, les bonnes propriétés de la couche ITO permettent son association avec des verres teintés dans leur masse. Il en résulte un vitrage à propriétés électriques, optiques et thermiques intéressantes.

Des épaisseurs de plaques de verre ont été proposées précédemment grâce auxquelles les réglementations sont respectées, mais bien entendu des épaisseurs plus faibles que celles proposées sont à fortiori acceptables, le coefficient T_{L} n'en sera que plus élevé.

La solidité de cette couche autorise le bombage de son support après dépôt, sans précaution particulière même lorsqu'après bombage ladite couche est disposée sur la face convexe de son support.

Ce vitrage peut être utilisé en tant que pare-brise chauffant pour automobile.

## Revendications

1. Procédé de fabrication d'un vitrage bombé comprenant au moins une plaque de verre (11 - 15) revêtue d'une couche électroconductrice (12 - 16) à base d'oxyde métallique, notamment une couche d'oxyde d'indium dopé à l'étain ITO, cette couche (12 - 16) étant associée à une feuille (17), plaquée sur elle, composée d'une matière plastique souple, caractérisé en ce qu'il consiste à :
. déposer sur la plaque de verre (11 - 15) plane la couche électroconductrice (12 -

16) par une technique de pyrolyse de composés pulvérulents,
. effectuer le bombage de la plaque de verre (11 - 15) ainsi revêtue de manière à ce que la couche électroconductrice (12 - 16) se trouve située sur la face convexe de ladite plaque de verre,
. effectuer le cas échéant le bombage de la seconde plaque de verre (18) destinée à être plaquée sur l'autre face, de la feuille (17) en matière plastique,
. effectuer le traitement réducteur de la couche électroconductrice (12 - 16),
. assembler la (les) plaque(s) de verre avec la feuille (17) en matière plastique et le cas échéant la seconde plaque de verre (18).

2. Procédé selon la revendication 1, caractérisé en ce que traitement réducteur et bombage(s) sont effectués simultanément.

3. Procédé selon l'une des revendications précédentes, caractérisé en ce que la feuille (17) en matière plastique est un matériau appartenant au groupe suivant : polyvinylbutyral (PVB), chlorure de polyvinyl (PVC), polyuréthane (PU) et possède un indice de réfraction intermédiaire entre celui de l'air égal à 1 et celui de la couche électroconductrice (12 - 16) de 1,8.

4. Procédé selon l'une des revendications précédentes, caractérisé en ce que la couche en matière plastique (17) est colorée.

5. Procédé selon l'une des revendications précédentes, caractérisé en ce que la couche électroconductrice (12 - 16) a une épaisseur d'au moins 330 nanomètres et de préférence de l'ordre de 350 à 380 nanomètres.

6. Procédé selon l'une des revendications 1 à 4, caractérisé en ce que la couche électroconductrice (12 - 16) a une épaisseur de l'ordre de 180 nanomètres.

7. Procédé selon l'une des revendications précédentes, caractérisé en ce qu'il utilise au moins une plaque de verre teintée dans sa masse et à coefficient de transmission énergétique réduit.

8. Procédé selon la revendication 7, caractérisé en ce que le verre teinté est soit vert, soit de la même couleur que la couche électroconductrice (12 - 16).

9. Procédé selon la revendication 8, caractérisé en ce que le verre teinté est du verre dit « TSA » ou « TSA+2 », c'est-à-dire contenant des oxydes colorants dans les proportions pondérales approximatives suivantes :
« TSA »
Fe₂0₃ : compris entre 0,55 et 0,62 % FeO : compris entre 0,11 et 0,16 % CoO : inférieur à 12 et de préférence
10 ppm
^{«} TSA+2 _{»}
Fe₂0₃ : compris entre 0,75 et 0,90 % FeO : compris entre 0,15 et 0,22 % CoO : inférieur à 17 et de préférence
10 ppm.

10. Procédé selon l'une des revendications 7 à 9 précédentes, caractérisé en ce que le verre teinté est celui qui porte la couche électroconductrice (12 - 16).

11. Procédé selon la revendication 10, caractérisé en ce que le vitrage comprend une seule plaque de verre du type « TSA » ou « TSA+2 » d'épaisseur maximale 4 mm portant une couche électroconductrice (12 - 16) et une feuille de polyuréthane plaquée sur la plaque de verre du côté de ladite couche électroconductrice.

12. Procédé selon l'une des revendications précédentes, caractérisé en ce qu'il consiste, en outre, à munir la couche électroconductrice (12 - 16) de moyens d'amenée du courant pour l'alimenter électriquement.

13. Procédé selon la revendication 12, caractérisé en ce que les moyens d'amenée du courant sont constitués de deux bandes sérigraphiées à base d'argent.

14. Procédé selon la revendication 12, caractérisé en ce que les moyens d'amenée du courant sont deux clinquants métalliques (14a, 14b) qui sont mis en contact avec la couche électroconductrice (12 - 16), ces clinquants étant disposés entre ladite couche et la feuille de matière plastique souple (17) plaquée contre ladite couche (12 - 16).

15. Procédé selon la revendication 14, caractérisé en ce que les deux connexions électriques destinées à brancher les clinquants sont au même endroit, dans le prolongement de l'une des bandes d'amenée de courant formée par l'un des clinquants, l'autre bande d'amenée de courant formée par l'autre clinquant passant du côte de l'autre face de la feuille de matière souple (17) non en contact avec la couche électroconductrice (12 - 16) au travers d'une incision pratiquée dans cette feuille et cheminant jusqu'à la position commune de sortie en étant isolé de la couche électroconductrice (12 - 16) par l'épaisseur de la feuille de matière plastique (17).

16. Procédé selon les revendications 11 et 13, caractérisé en ce qu'on dépose sur la plaque unique de verre, à sa périphérie, une couche d'émail opaque continue puis dégradée en pointillés du côté du centre du vitrage, la bande conductrice sérigraphiée à base d'argent étant disposée en limite de l'émail, en partie sur les pointillés de l'émail et en partie sur la couche électroconductrice (12 - 16).

17. Procédé selon l'une des revendications précédentes, caractérisé en ce qu'il consiste à encapsuler le vitrage une fois assemblé.

18. Procédé de fabrication d'un vitrage selon les revendications précédentes, caractérisé en ce que :
· sur une plaque de verre (11 - 15) revêtue d'oxyde d'indium dopé à l'étain (12 - 16) sur une face qu'on appelle conventionnellement face 3, on réalise sur l'autre face, conventionnellement la face 4, un dépôt périphérique d'émail opaque,
· sur une autre plaque de verre (18), en verre clair, en verre du type « TSA » ou « TSA+2 » ou verre teinté du même type, on réalise sur une face appelée conventionnellement face 2 un dépôt périphérique d'émail opaque,
· on superpose les deux plaques (11 - 15 -

18), face 2 contre face 3 et on les dispose dans un four sur un squelette ou cadre de bombage en vue de leur bombage,

· on réduit la couche d'oxyde d'indium dopé à l'étain,
· on réalise les bandes d'amenée de courant électrique,
· on assemble et on feuillette les deux plaques de verre avec intercalation de la feuille en matière plastique (17) d'indice supérieur à 1, du type polyvinylbutyral.

19. Procédé selon la revendication 18, caractérisé en ce qu'on procède au traitement réducteur de la couche d'oxyde d'indium dopé à l'étain par recuisson en atmosphère réductrice sous pression contrôlée.

20. Procédé selon la revendication 19, caractérisé en ce que la pression contrôlée est inférieure à 1 bar et en particulier de l'ordre de 0 à 0,5 bar par exemple 0,2 bar.

21. Procédé selon l'une des revendications 18 à 20, caractérisé en ce que le traitement réducteur est pratiqué avec les deux plaques de verre superposées (11 - 15 - 18), la couche d'oxyde d'indium dopé à l'étain (12 - 16) étant disposée sur la face de l'une des plaques en contact avec l'autre plaque.

22. Procédé selon la revendication 21, caractérisé en ce que le traitement réducteur et le bombage sont conduits simultanément.

23. Procédé selon la revendication 18, caractérisé en ce que les bandes d'amenée de courant sont des clinquants métalliques (14a, 14b) et en ce qu'on les fixe notamment par soudure, le long des bordures de la feuille (17) de matière plastique lors de l'assemblage et du feuilletage, les clinquants étant appliqués contre la couche d'oxyde d'indium dopé à l'étain.

24. Procédé selon la revendication 23, caractérisé en ce que le clinquant formant l'une des bandes d'amenée de courant est passé de l'autre côte de la feuille en matière plastique

(17) au travers d'une incision, et amené au niveau de l'autre clinquant, les deux clinquants étant ainsi disposés au même endroit.

25. Procédé selon l'une des revendications précédentes où les vitrages bombés à fabriquer sont des vitrages chauffants pour l'automobile, notamment des pare-brise.

26. Procédé selon l'une des revendications 1 à 24 où les vitrages bombés à fabriquer sont des vitrages chauffants à deux plaques de verre entre lesquelles se trouvent une feuille de matière plastique et une couche électroconductrice, la couche électroconductrice se trouvant sur la face convexe de l'une des plaques de verre correspondant à la face 3 du vitrage, les faces de verre étant conventionnellement numérotées 1, 2, 3 et 4 de l'extérieur vers l'intérieur de l'habitacle fermé par ledit vitrage.

27. Procédé selon la revendication 26, caractérisé en ce que la plaque portant en face 3 la couche électroconductrice est en verre clair, l'autre plaque de verre étant du type « TSA » ou « TSA+2 _{».}

28. Procédé selon la revendication 27, caractérisé en ce que :
. l'épaisseur de la plaque de verre portant en face 3 la couche électroconductrice est de 1,1 à 2,6 millimètres,
. l'épaisseur de la couche électroconductrice est de 350 à 380 nanomètres,
. l'épaisseur de l'autre plaque de verre est au maximum de 2,2 millimètres.

29. Procédé selon la revendication 27, caractérisé en ce que :
. l'épaisseur de la plaque de verre portant en face 3 la couche électroconductrice est de 2,1 à 2,6 millimètres,
. l'épaisseur de la couche électroconductrice est de 180 nanomètres,
. l'épaisseur de l'autre plaque de verre est au maximum de 2,6 millimètres.

30. Procédé selon l'une des revendications précédentes où les vitrages bombés fabriqués présentent des valeurs de transmission lumineuse T_{L} supérieure à 70 et même 75%, une transmission énergétique T_{E} réduite conduisant à un rapport T_{L}/T_{E} d'environ 1,5 et une résistance électrique par carré uniforme.

31. Procédé selon l'une des revendications précédentes où les vitrages bombés fabriqués présentent une résistance électrique par carré inférieure ou égale à 5 ohms-carré, en particulier égale à 4,5 ohms-carré ou d'environ 10 ohms-carré.

## Claims

1. Process for the production of a cambered glazing comprising at least one glass plate (11 to

15) coated with an electroconductive coating (12 to 16) based on metal oxide, in particular a tin-doped indium oxide coating ITO, said coating (12 to 16) being associated with a sheet

(17) engaged thereon and formed from a flexible plastics material, characterized in that it comprises:
depositing on the planar glass plate (11 to 15) the electroconductive coating (12 to 16) by pyrolysis of pulverulent compounds,
performing the cambering of the thus coated glass plate (11 to 15) in such a way that the electroconductive coating (12 to 16) is on the convex face of said glass plate,
if appropriate, cambering the second glass plate (18) to be engaged on the other face of the plastics material sheet (17),
performing the reducing treatment of the electroconductive coating (12 to 16),
assembling the glass plate or plates with the plastics material sheet (17) and, if appropriate, the second glass plate (18).

2. Process according to claim 1, characterized in that the reducing and cambering treatments are performed simultaneously.

3. Process according to one of the preceding claims, characterized in that the plastics material sheet (17) is of a material belonging to the following group: polyvinyl butyral (PVB), polyvinyl chloride (PVC) and polyurethane (PU) and has a refractive index intermediate between that of air equal to 1 and that of the electroconductive coating (12 to 16) of 1.8.

4. Process according to one of the preceding claims, characterized in that the plastics material sheet (17) is coloured.

5. Process according to one of the preceding claims, characterized in that the electroconductive coating (12 to 16) has a thickness of at least 330 nanometres and preferably approximately 350 to 380 nanometres.

6. Process according to one of the claims 1 to 4, characterized in that the electrconductive coating (12 to 16) has a thickness of approximately 180 nanometres.

7. Process according to one of the preceding claims, characterized in that use is made of at least one glass plate tinted in its mass and having a reduced energy transmission coefficient.

8. Process according to claim 7, characterized in that the tinted glass is either green or of the same colour as the electroconductive coating (12 to 16).

9. Process according to claim 8, characterized in that the tinted glass is of so-called TSA or TSA+2 glass, i.e. containing colouring oxides in the following approximate weight proportions:
TSA
Fe₂0₃ : between 0.55 and 0.62% FeO : between 0.11 and 0.16% CoO : below 12 and preferably 10
ppm
TS_{A} +₂
Fe₂0₃ : between 0.75 and 0.90% FeO : between 0.15 and 0.22% CoO : below 17 and preferably 10
ppm.

10. Process according to one of the claims 7 to 9, characterized in that the tinted glass is that which carries the electroconductive coating (12 to 16).

11. Process according to claim 10, characterized in that the glazing comprises a single glass plate of the TSA or TSA+2 type with a maximum thickness of 4 mm carrying an electroconductive coating (12 to 16) and a polyurethane sheet engaged on the glass plate on the side of said electroconductive coating.

12. Process according to one of the preceding claims, characterized in that it also consists of providing the electroconductive coating (12 to 16) with power supply leads for supplying it electrically.

13. Process according to claim 12, characterized in that the power supply leads are constituted by two silver-based screen process printed strips.

14. Process according to claim 12, characterized in that the power supply leads are metal tinsels (14a, 14b), which are contacted with the electroconductive coating (12 to 16), said tinsels being placed between said coating and the flexible, plastics material sheet (17) engaged against said coating (12 to 16).

15. Process according to claim 14, characterized in that the two electrical connections for the connection of the tinsels are at the same location, in the extension of one of the power supply leads formed by one of the tinsels, the other power supply lead formed by the other tinsel passing from the side of the other face of the flexible material sheet (17) not in contact with the electroconductive coating (12 to 16) through an opening made in said sheet and continuing up to the common exit position, whilst being insulated from the electroconductive coating (12 to 16) by the thickness of the plastics material sheet (17).

16. Process according to claims 11 and 13, characterized in that on the periphery of the single glass plate is deposited a continuous, opaque enamel coating and is then broken down into dots on the side of the centre of the glazing, the screen process printed conductive strip based on silver being located at the limit of the enamel, in part on the dots of the enamel and in part on the electroconductive coating (12 to 16).

17. Process according to one of the preceding claims, characterized in that it consists of encapsulating the assembled glazing.

18. Process for the production of a glazing according to the preceding claims, characterized in that:
on a glass plate (11 to 15) coated with tin-doped indium oxide (12 to 16) on a face conventionally called face 3, is formed on the other face, conventionally face 4, a peripheral, opaque enamel deposit,
on another clear glass plate (18), of type TSA or TSA+2 glass, or tinted glass of the same type, is formed on a face conventionally called face 2, a peripheral, opaque enamel deposit, the two plates (11-15-18) are superimposed
face 2 against face 3 and placed in a furnace on a cambering frame or structure with a view to the cambering thereof,
the tin-doped indium oxide coating is reduced, the power supply leads are formed,
the two glass plates are assembled and laminated with the interposing of the plastics material sheet (17) having an index higher than 1 and of the polyvinyl butyral type.

19. Process according to claim 18, characterized in that the tin-doped indium oxide coating is reduced by annealing in a reducing atmosphere under controlled pressure.

20. Process according to claim 19, characterized in that the controlled pressure is below 1 bar and in particular approximately 0 to 0.5 bar, e.g. 0.2 bar.

21. Process according to one of the claims 18 to 20, characterized in that the reducing treatment is carried out with the two glass plates superimposed (11-15-18), the tin-doped indium oxide coating (12-16) being placed on the face of one of the plates in contact with the other plate.

22. Process according to claim 21, characterized in that the reducing treatment and cambering are performed simultaneously.

23. Process according to claim 18, characterized in that the power supply leads are metal tinsels (14a, 14b) and that they are in particular fixed by welding along the edges of the plastics material sheet (17) during assembly and lamination, the tinsels being applied to the tin-doped indium oxide coating.

24. Process according to claim 23, characterized in that the tinsel forming one of the power supply leads is passed from the other side of the plastics material sheet (17) through an opening and brought level with the other tinsel, the two tinsels thus being located at the same point.

25. Process according to one of the preceding claims where the cambered glazings to be produced are heated glazings for cars, particularly for windscreens.

26. Process according to one of the claims 1 to 24 where the cambered glazings to be produced are heated glazings having two glass plates between which there is a plastics material sheet and an electroconductive coating, the

electroconductive coating being on the convex face of one of the glass plates corresponding to face 3 of the glazing, the glass faces being conventionally numbered 1, 2, 3 and 4 from the outside to the inside of the cab closed by the said glazing.

27. Process according to claim 26, characterized in that the plate carrying on face 3 the electroconductive coating is of clear glass, the other glass plate being of the TSA or TSA¹² type.

28. Process according to claim 27, characterized in that: the thickness of the glass plate carrying on face 3 the electroconductive coating is 1.1 to 2.6 millimetres, the thickness of the electroconductive coating is 350 to 380 nanometres, the thickness of the other glass plate is max. 2.2 millimetres.

29. Process according to claim 27, characterized in that: the thickness of the glass plate carrying on face 3 the electroconductive coating is 2.1 to 2.6 millimetres, the thickness of the elec- trocondutive coating is 180 nanometres, the thickness of the other glass plate is max. 2.6 millimetres.

30. Process according to one of the preceding claims where the cambered glazings produced have light transmission values T_{L} exceeding 70 and even 75%, a reduced energy transmission T_{E} leading to a T_{L}/T_{E} ratio of approximately 1.5 and a uniform electric resistance per square.

31. Process according to one of the preceding claims, where the cambered glazings produced have an electric resistance per square equal to or below 5 ohm², in particular equal to 4.5 ohm² or approximately 10 ohm².

## Patentansprüche

1. Verfahren zur Herstellung einer gebogenen Verglasung, welche wenigstens eine Glasscheibe (11, 15) umfaßt, die mit einer elektrisch leitfähigen Schicht (12, 16) auf der Grundlage von Metalloxid, insbesondere einer mit Zinn dotierten Indiumoxidschicht ITO überzogen ist, wobei diese Schicht (12, 16) mit einer sie bedeckenden Folie (17), die aus nachgiebigem Kunststoff besteht, verbunden ist, dadurch gekennzeichnet, daß es besteht aus:
- Aufbringen der elektrisch leitfähigen Schicht (12, 16) ausgehend von pulverförmigen Verbindungen durch ein Pyrolyseverfahren auf der flachen Glasscheibe (11,15),
- Biegen der so beschichteten Glasscheibe (11, 15) auf eine Weise, daß sich die elektrisch leitfähige Schicht (12, 16) auf der konvexen Seite dieser Glasscheibe befindet,
- gegebenenfalls Biegen der zweiten Glasscheibe (18), die vorgesehen ist, die andere Seite der Kunststoffolie (17) zu bedecken,
- Durchfuhren der Reduktionsbehandlung der elektrisch leitfähigen Schicht (12, 16) und
- Zusammenbau der Glasscheibe/n mit der Kunststoffolie (17) und gegebenenfalls der zweiten Glasscheibe (18).

2. Verfahren nach Anspruch 1, dadurch gekennzeichnet, daß Reduktionsbehandlung und Biegevorgang/-vorgänge gleichzeitig durchgeführt werden.

3. Verfahren nach Anspruch 1 oder 2, dadurch gekennzeichnet, daß die Kunststoffolie (17) aus einem Material besteht, das zur folgenden aus Polyvinylbutyral (PVB), Polyvinylchlorid (PVC) und Polyurethan (PU) bestehenden Gruppe gehört und einen Brechungsindex besitzt, der zwischen dem von Luft, der 1 ist, und dem der elektrisch leitfähigen Schicht (12, 16) von 1,8 liegt.

4. Verfahren nach einem der vorhergehenden Ansprüche, dadurch gekennzeichnet, daß die Kunststoffolie (17) gefärbt ist.

5. Verfahren nach einem der vorhergehenden Ansprüche, dadurch gekennzeichnet, daß die elektrisch leitfähige Schicht (12, 16) wenigstens 330 und vorzugsweise etwa 350 bis 380 nm dick ist.

6. Verfahren nach einem der Ansprüche 1 bis 4, dadurch gekennzeichnet, daß die elektrisch leitfähige Schicht (12, 16) etwa 180 nm dick ist.

7. Verfahren nach einem der vorhergehenden Ansprüche, dadurch gekennzeichnet, daß wenigstens eine in der Masse gefärbte Glasscheibe mit niedrigem Energietransmissionsgrad verwendet wird.

8. Verfahren nach Anspruch 7, dadurch gekennzeichnet, daß das gefärbte Glas entweder grün oder wie die elektrisch leitfähige Schicht (12, 16) gefärbt ist.

9. Verfahren nach Anspruch 8, dadurch gekennzeichnet, daß das gefärbte Glas ein mit "TSA" oder "TSA²⁺" bezeichnetes Glas ist, d.h. Farboxide in folgenden angenäherten Gewichtsanteilen enthält:
"TSA"
Fe₂0₃ : 0,55 bis 0,62 %,
FeO : 0,11 bis 0,16 % und
CoO : unter 12 und vorzugsweise 10 ppm,
"TSA2+
Fe₂0₃ : 0,75 bis 0,90 %,
FeO : 0,15 bis 0,22 % und
CoO : unter 17 und vorzugsweise 10 ppm.

10. Verfahren nach einem der Ansprüche 7 bis 9, dadurch gekennzeichnet, daß die elektrisch leitfähige Schicht (12, 16) auf dem gefärbten Glas aufgebracht ist.

11. Verfahren nach Anspruch 10, dadurch gekennzeichnet, daß die Verglasung eine einzige maximal 4 mm dicke Glasscheibe des Typs "TSA" oder "TSA²⁺" umfaßt, die eine elektrisch leitfähige Schicht (12, 16) und eine Polyurethanfolie trägt, welche die Glasscheibe auf der Seite der elektrisch leitfähigen Schicht bedeckt.

12. Verfahren nach einem der vorhergehenden Ansprüche, dadurch gekennzeichnet, daß es außerdem darin besteht, die elektrisch leitfähige Schicht (12, 16) mit Stromzuführungsmitteln zu versehen, um sie mit elektrischem Strom zu versorgen.

13. Verfahren nach Anspruch 12, dadurch gekennzeichnet, daß die Stromzuführungsmittel aus zwei mit Siebdruck aufgebrachten Streifen auf Silbergrundlage bestehen.

14. Verfahren nach Anspruch 12, dadurch gekennzeichnet, daß die Stromzuführungsmittel zwei Metallfolien (14a, 14b) sind, die mit der elektrisch leitfähigen Schicht (12, 16) in Kontakt gebracht werden, wobei diese Metallfolien zwischen dieser Schicht und der nachgiebigen Kunststofffolie (17), die diese Schicht (12, 16) bedeckt, angeordnet sind.

15. Verfahren nach Anspruch 14, dadurch gekennzeichnet, daß sich die beiden elektrischen Anschlüsse, die zum Anschluß der Metallfolien vorgesehen sind, in Verlängerung eines der von einer der Metallfolien gebildeten Stromzuführungsstreifen an derselben Stelle befinden, wobei der andere von der anderen

Metallfolie gebildete Stromzuführungsstreifen von einer Seite auf die andere Seite der Folie (17) aus nachgiebigem Material, welche sich nicht mit der elektrisch leitfähigen Schicht (12, 16) in Kontakt befindet, durch eine in dieser Folie angebrachte Aussparung bis zur gemeinsamen Austrittsstelle geführt wird, dabei ist er von der elektrisch leitfähigen Schicht (12, 16) durch die Kunststoffolie (17) isoliert.

16. Verfahren nach den Ansprüchen 11 und 13, dadurch gekennzeichnet, daß auf dem Umfang der einzigen Glasscheibe eine ununterbrochene opake Emailschicht aufgebracht und anschließend an der Seite zur Mitte der Verglasung punktförmig abgestuft wird, wobei der mit Siebdruck aufgebrachte leitfähige Streifen auf Silbergrundlage innerhalb der Grenzen des Emails, teilweise auf den Emailpunkten und teilweise auf der elektrisch leitfähigen Schicht (12, 16) angeordnet ist.

17. Verfahren nach einem der vorhergehenden Ansprüche, dadurch gekennzeichnet, daß es in der Ummantelung der zusammengebauten Verbundverglasung besteht.

18. Verfahren zur Herstellung einer Verglasung nach den vorhergehenden Ansprüchen, dadurch gekennzeichnet, daß

- bei einer Glasscheibe (11, 15), die auf einer üblicherweise als Seite 3 bezeichneten Seite mit einer mit Zinn dotierten Indiumoxidschicht (12, 16) überzogen ist, auf der anderen üblicherweise als Seite 4 bezeichneten Seite eine opake Umfangsemailschicht aufgebracht wird,
- auf einer anderen Glasscheibe (18) aus klarem Glas, aus Glas des Typs "TSA" oder "TSA²⁺" oder gefärbtem Glas desselben Typs auf einer üblicherweise als Seite 2 bezeichneten Seite eine opake Umfangsemailschicht aufgebracht wird,
- die beiden Scheiben (11, 15, 18) Seite 2 auf Seite 3 übereinandergelegt und auf einem Biegerahmen oder -skelett in einen Ofen gefahren werden, um sie zu biegen,
- die mit Zinn dotierte Indiumoxidschicht reduziert wird,
- elektrische Stromzuführungsstreifen angebracht werden und
- die beiden Glasscheiben mit der Kunststoffolie (17) mit einem größeren Brechungsindex als 1 vom Typ Polyvinylbutyral als Zwischenschicht geschichtet und verbunden werden.

19. Verfahren nach Anspruch 18, dadurch gekennzeichnet, daß die Reduktionsbehandlung der mit Zinn dotierten Indiumoxid-schicht durch Einbrennen in reduzierender Atmosphäre unter geregeltem Druck durchgeführt wird.

20. Verfahren nach Anspruch 19, dadurch gekennzeichnet, daß der geregelte Druck weniger als 1 bar und insbesondere etwa 0 bis 0,5 und beispielsweise 0,2 bar beträgt.

21. Verfahren nach einem der Ansprüche 18 bis 20, dadurch gekennzeichnet, daß die Reduktionsbehandlung mit zwei übereinandergelegten Glasscheiben (11, 15, 18) erfolgt, wobei die mit Zinn dotierte Indiumoxidschicht (12, 16) auf der Seite einer der Scheiben aufgebracht ist, die sich mit der anderen Scheibe in Berührung befindet.

22. Verfahren nach Anspruch 21, dadurch gekennzeichnet, daß Reduktionsbehandlung und Biegevorgang gleichzeitig durchge-führt werden.

23. Verfahren nach Anspruch 18, dadurch gekennzeichnet, daß die Stromzuführungsstreifen Metallfolien (14a, 14b) sind und daß sie insbesondere durch Schweißen entlang der Ränder der Kunststoffolie (17) während der Schicht- und Verbund-bildung befestigt und die Metallfolien auf die mit Zinn dotierte Indiumoxidschicht angelegt werden.

24. Verfahren nach Anspruch 23, dadurch gekennzeichnet, daß die einen der Stromzuführungsstreifen bildende Metallfolie auf die andere Seite der Kunststoffolie (17) durch eine Aussparung geführt und auf die Höhe der anderen Metallfolie gebracht wird, wodurch die beiden Metallfolien an derselben Stelle angeordnet werden.

25. Verfahren nach einem der vorhergehenden Ansprüche, worin die herzustellenden gebogenen Verglasungen beheizbare Auto-verglasungen und insbesondere Windschutzscheiben sind.

26. Verfahren nach einem der Ansprüche 1 bis 24, worin die herzustellenden gebogenen Verglasungen beheizbare Verglasungen mit zwei Glasscheiben sind, zwischen denen sich eine Kunststoffolie und eine elektrisch leitfähige Schicht befindet, wobei die elektrisch leitfähige Schicht auf der konvexen Seite einer der Glasscheiben aufgebracht ist, die der Seite 3 der Verglasung entspricht, und die Seiten der Glasscheiben üblicherweise mit 1, 2, 3 und 4 von außen zum Inneren der Fahrgastzelle numeriert sind, die von der Verglasung abgeschlossen wird.

27. Verfahren nach Anspruch 26, dadurch gekennzeichnet, daß die auf Seite 3 die elektrisch leitfähige Schicht tragende Glasscheibe aus klarem Glas und die andere Glasscheibe vom Typ "TSA" oder "TSA²⁺" ist.

28. Verfahren nach Anspruch 27, dadurch gekennzeichnet, daß:
- die Dicke der auf Seite 3 die elektrisch leitfähige Schicht tragenden Glasscheibe 1,1 bis 2,6 mm,
- die Dicke der elektrisch leitfähigen Schicht 350 bis 380 nm und
- die Dicke der anderen Glasscheibe höchstens 2,2 mm beträgt.

29. Verfahren nach Anspruch 27, dadurch gekennzeichnet, daß:
- die Dicke der auf Seite 3 die elektrisch leitfähige Schicht tragenden Glasscheibe 2,1 bis 2,6 mm,
- die Dicke der elektrisch leitfähigen Schicht 180 nm und
- die Dicke der anderen Glasscheibe höchstens 2,6 mm beträgt.

30. Verfahren nach einem der vorhergehenden Ansprüche, worin die herzustellenden gebogenen Verglasungen Lichttransmissionsgrade T_{L} von über 70 und sogar 75 %, einen niedrigen Energietransmissionsgrad T_{E}, der ein Verhältnis von T_{L}/T_{E} von etwa 1,5 ergibt, und einen einheitlichen elektrischen Widerstand pro Flächenquadrat aufweisen.

31. Verfahren nach einem der vorhergehenden Ansprüche, worin die herzustellenden gebogenen Verglasungen einen elektrischen Widerstand pro Flächenquadrat von unter oder gleich 5 f2 pro Flächenquadrat, insbesondere gleich 4,5 Ω pro Flächenquadrat, oder von etwa 10 Ω pro Flächenquadrat aufweisen.
